Europäisches Patentamt

European Patent Office

Office européen des brevets

(11) Veröffentlichungsnummer: **0 228 505**
A1

## (12) EUROPÄISCHE PATENTANMELDUNG

(21) Anmeldenummer: 86111914.7

(22) Anmeldetag: 28.08.86

(51) Int. Cl.⁴: **C08L 63/00** , C08K 3/22 , C09K 3/10 , B41M 1/12

(30) Priorität: 12.12.85 DE 3543839

(43) Veröffentlichungstag der Anmeldung:
15.07.87 Patentblatt 87/29

(84) Benannte Vertragsstaaten:
DE FR GB IT SE

(71) Anmelder: GOETZE AG
Bürgermeister-Schmidt-Strasse 17
D-5093 Burscheid 1(DE)

(72) Erfinder: Giesen, Franz-Josef
Am Alten Turm 1a
D-5068 Odenthal 3(DE)
Erfinder: Zerfass, Hans-Rainer, Dr.
Finkenweg 8
D-5093 Burscheid(DE)

(54) **Siebdruckfähige Epoxidharzmasse.**

(57) Eine siebdruckfähige Epoxidharzmasse mit hoher Verarbeitbarkeitszeit im Siebdruckverfahren enthält als Zusatz ein anorganisches, pulvriges bis feinkörniges Trocknungsmittel aus bevorzugt Calciumoxid (CaO) in Mengen von 0,5 bis 10 Gewichtsprozent und gegebenenfalls 0,1 bis 3 Gewichtsprozent eines flüssigen Polyethersiloxans. Die Epoxidharzmasse kann gegebenenfalls mit bis zu 90 Gewichtsprozent einer härtbaren Polyurethanmasse vermischt sein und dient vor allem zur Herstellung von druckfesten, reibungsbeständigen, bruchfesten und/oder temperaturbeständigen Auflagen auf Metall-oder Weichstoffflachdichtungen für Verbrennungskraftmaschinen im Siebdruckverfahren.

EP 0 228 505 A1

## Siebdruckfähige Epoxidharzmasse.

Die Erfindung betrifft eine siebdruckfähige Epoxidharzmasse, insbesondere für die Herstellung füllstoffhaltiger Auflagen auf den Dichtflächen von Flachdichtungen.

Bei Flachdichtungen, wie insbesondere Zylinderkopfdichtungen für Verbrennungskraftmaschinen, ist es bekannt, die Dichtflächen zur lokalen Erhöhung der Dichtpressung mit profilierten Auflagen zu versehen. Diese Auflagen werden bevorzugt im Siebdruckverfahren aufgetragen und sie erstrecken sich zur Erhöhung der Abdichtwirkung bevorzugt ringförmig rund um die Durchgangsöffnungen für die Schmieröle, Kühlemittel, den Brennraum oder die Befestigungsschrauben. Das Auflagenmaterial besteht zur Erzielung einer optimalen Abdichtwirkung und Anpassung an die Dichtflächen bevorzugt aus einem elastisch verformbaren Material und wird nach dem Auftrag der siebdruckfähigen Masse auf der Dichtung bevorzugt thermisch vernetzt beziehungsweise vulkanisiert.

Nachteilig bei derartig elastisch verformbaren Auflagen ist jedoch ihre relativ geringe Druckfestigkeit. Während bei normalen Dichtpressungsdrücken die Druckfestigkeit solcher Auflagen ausreicht, werden bei hohen Dichtpressungsdrücken in extremen Anwendungsfällen, insbesondere bei metallischen Flachdichtungen, die Auflagen unter dem Druck zerquetscht, die Auflagen werden zerstört und die Dichtung wird undicht.

Nach der US-PS 3 794 333 werden daher im Siebdruckverfahren auf die Dichtflächen zusätzlich Auflagen aus extrem druckfestem Material aufgetragen. Die Höhe dieser Auflagen ist geringer als die Höhe der ringförmig die Öffnungen umgebenden elastomeren Auflagen, so daß bei der Montage der auf die Elastomeren wirkende Dichtpressungsdruck begrenzt wird und die elastomeren Auflagen vor einem Zerquetschen geschützt sind. Druckfeste Auftragsmaterialien bestehen nach der US-PS 3 794 333 aus mit anorganischen Füllstoffen gefüllten Silikonharzen oder Epoxidharzen, die nach dem Mischen der einzelnen Komponenten durch ein Siebdruckverfahren auf die Dichtflächen aufgetragen und dort zu einer druckfesten Auflage ausgehärtet werden.

Epoxidharzsysteme aus Epoxid-und Härtergemischen lassen sich allgemein in der Kunststofftechnik gut verarbeiten, beim Siebdrucken jedoch kommen die feuchtigkeitsempfindlichen Epoxidharz-Härter-Systeme verstärkt mit der Luft in Berührung. Die Luftfeuchtigkeit bewirkt ein vorzeitiges Gelieren der Mischung schon auf dem Sieb und im Vorratsbehälter, es entstehen kostspielige Verluste und das Sieb muß häufiger gereinigt werden.

Der vorliegenden Erfindung liegt daher die Aufgabe zugrunde, eine siebdruckfähige Epoxidharzmasse ohne die beschriebenen Nachteile zu schaffen, mit der sich im Siebdruckverfahren vor allem Auflagen auf Flachdichtungen wirtschaftlich herstellen lassen. Diese Aufgabe wird durch ein Epoxidharzsystem mit Epoxidharz, Epoxidhärter, gegebenenfalls anorganischen Füllstoffen und weiteren Zusätzen gelöst, welche erfindungsgemäß Zusätze eines anorganischen, pulvrigen bis feinkörnigen Trocknungsmittels enthält. Bevorzugt wird als anorganisches, festes Trocknungsmittel Calciumoxid (CaO) in Zusatzmengen zwischen 0,5 und 10 Gewichtsprozent verwendet, und es wurde gefunden, daß zur Erzielung optimaler Ergebnisse das Trocknungsmittel zusammen bevorzugt mit 0,1 bis 3 Gewichtsprozent eines flüssigen Polyethersiloxans dem Epoxidharzansatz zugegeben werden muß.

Mit dem erfindungsgemäßen Epoxidharzansatz wurden Siebdruckversuche durchgeführt und es wurde gefunden, daß diese Epoxidharzansätze etwa doppelt so lange auf dem Sieb zu verarbeiten sind wie Epoxidharzansätze ohne die erfindungsgemäßen Zusätze. Das vorhandene Trockungsmittel, und zwar das vor allem verwendete Calciumoxid nimmt bei der Verarbeitung die Luftfeuchtigkeit auf und bindet offensichtlich das aufgenommen Wasser so, daß es im Epoxidharzsystem nicht mehr Härtungsreaktionen auslöst und ein frühzeitiges Gelieren hervorruft. Das gleichzeitig zusammen mit dem Calciumoxid bevorzugt zugegebene flüssige Polyethersiloxan wirkt der Verdickung der Epoxidharzmasse durch den Feststoffzusatz entgegen und die Epoxidharzmasse bleibt siebdruckfähig. Entsprechend der Viskosität der Epoxidharzmasse bleibt es dem Fachmann dabei überlassen, die zuzugebende Menge an flüssigem Polyethersiloxan innerhalb der angegebenen Mengen abgestimmt auf den Anwendungsfall zu variieren.

Die im Siebdruckverfahren hergestellten Auflagen besitzen etwa die gleichen Eigenschaften wie die aus Epoxidharzen ohne erfindungsgemäßen Zusatz hergestellten Auflagen. Offensichtlich gerade durch den Einsatz von Calciumoxid im Zusammenhang mit der Zugabe von Polyethersiloxan wird die Formfestigkeit der Auflagen nach dem Auftragen, ihr Härtungsverhalten und die Druckfestigkeit nach dem Härten so gut wie überhaupt nicht beeinflußt.

Eine bevorzugt verwendete Rezeptur einer siebdruckfähigen Epoxidharzmasse hat etwa die folgende Zusammensetzung:

100 g eines Epoxidharzes, bevorzugt auf der Basis eines Bisphenol-A-Typs,

100 g eines Epoxidhärters auf bevorzugt Carbonsäureanhydridbasis wie Phtalsäureanhydrid,

10 g eines für Epoxidharze üblichen Flexibilisators,

1 g eines für Epoxidharze üblichen aminischen Beschleunigers,

300 g eines anorganischen, pulvrigen bis feinkörnigen Füllstoffs aus bevorzugt Bariumsulfat, Calciumsilikat oder Calciumcarbonat,

3 g Farbpigment, wie Ruß oder Eisenpigment,

5 g Calciumoxid,

2 g eines flüssigen Polyethersiloxans (Mg 5 - 10.000).

Gefunden wurde auch, daß der Epoxidharzansatz bis zu gegebenenfalls 90 Gewichtsprozent mit einem üblichen härtbaren Polyurethanharzansatz vernetzt werden kann und die Verarbeitbarkeitszeit dieser Mischung im Siebdruckverfahren durch den erfindungsgemäßen Calciumoxidzusatz in gleicher Weise erhöht wird. Die feuchtigkeitsempfindliche Polyurethanmischung scheint offensichtlich durch den Zusatz genauso vor einem frühzeitigen Gelieren geschützt zu werden.

Durch die Erfindung ist somit eine siebdruckfähige Epoxidharzmasse mit hoher Verarbeitbarkeitszeit im Siebdruckverfahren geschaffen. Die Epoxidharzauflagen lassen sich auf diese Weise ohne größere Verluste und ohne erhöhte Werkzeugkosten wirtschaftlich herstellen. Die erhaltenen Auflagen sind dabei je nach Einstellung der Mischung zu druckfesten Auflagen aushärtbar. Die Auflagen können, wie aus der US-PS 3 974 333 bekannt, der Dichtpressungsdruckbegrenzung und damit dem Schutz elastomerer Auflagen auf metallischen Flachdichtungen vor einem Zerquetschen dienen. Im Sinne der Erfindung werden die Auflagen vor allem aber auf Weichstoffflachdichtungen oder Metallflachdichtungen ohne zusätzliche elastomere Auflagen verwendet. Die Epoxidharzauflagen werden dann an den Stellen eingesetzt, wo hohe Druckfestigkeit bei hoher Dichtpressung, eine hohe Reibungs-und Bruchfestigkeit bei vor allem Relativbewegungen der aufliegenden Dichtflächen gegeneinander und/oder eine hohe Temperaturbeständigkeit verlangt wird. Die erfindungsgemäßen Epoxidharzansätze können im Sinne der Erfindung vorteilhaft aber auch allgemein dort eingesetzt werden, wo Epoxidharzmassen im Siebdruckverfahren auch in anderen Anwendungsfällen verarbeitet werden.

## Ansprüche

1. Siebdruckfähige Epoxidharzmasse, insbesondere für die Herstellung füllstoffhaltiger Auflagen auf den Dichtflächen von Flachdichtungen in einem Siebdruckverfahren, dadurch gekennzeichnet, daß der Epoxidharzansatz Zusätze eines anorganischen, pulvrigen bis feinkörnigen Trocknungsmittels enthält.

2. Epoxidharzmasse nach Anspruch 1, dadurch gekennzeichnet, daß als Trocknungsmittel pulvriges bis feinkörniges Calciumoxid (CaO) in Mengen von 0,5 bis 10 Gewichtsprozent dem Epoxidharzansatz zugegeben ist.

3. Epoxidharzmasse nach Anspruch 2, dadurch gekennzeichnet, daß der Epoxidharzmasse 0,1 bis 3 Gewichtsprozent eines flüssigen Polyethersiloxans zugegeben ist.

4. Epoxidharzmasse nach den Ansprüchen 1 bis 3, dadurch gekennzeichnet, daß die Epoxidharzmasse aus

100 g eines Epoxidharzes, bevorzugt auf der Basis eines Bisphenol-A-Types,

100 g eines Epoxidhärters auf bevorzugt Anhydridbasis, wie Phtalsäureanhydrid,

10 g eines für Epoxidharze üblichen Flexibilisators,

300 g anorganischen Füllstoff, wie Bariumsulfat, Calciumcarbonat und/oder Calciumsilikat,

1 g eines für Epoxidharze üblichen aminischen Beschleunigers,

3 g Farbpigment, wie Ruß oder Eisenpigment,

5 g Calciumoxid,

2 g eines flüssigen Polyethersiloxans (Mg 5 - 10.000)

besteht.

5. Epoxidharzmasse nach mindestens einem der Ansprüche 1 bis 4, dadurch gekennzeichnet, daß der Epoxidharzansatz bis zu 90 Gewichtsprozent eines Polyurethanharzsansatzes enthält.

6. Verwendung der Epoxidharzmasse nach mindestens einem der Ansprüche 1 bis 5, für die Herstellung von druckfesten, reibungsbeständigen, bruchfesten und/oder temperaturbeständigen Auflagen auf Flachdichtungen aus Weichstoff oder Metall für Verbrennungskraftmaschinen im Siebdruckverfahren.

## EINSCHLÄGIGE DOKUMENTE

EP 86111914.7

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| A | US - A - 4 546 130 (NISHIDA et al.)<br><br>* Beispiele; Spalte 2, Zeilen 32-48 *<br><br>-- | 1 | C 08 L 63/00<br>C 08 K 3/22<br>C 09 K 3/10<br>B 41 M 1/12 |
| A | FR - A1 - 2 259 877 (MITSUI PETRO-CHEMICAL INDUSTRIES)<br><br>* Ansprüche 1,4 *<br><br>-- | 1,2 | |
| A | AT - B - 280 318 (AMERICAN CAN COMPANY)<br><br>* Ansprüche 1,2 *<br><br>---- | 6 | |

RECHERCHIERTE SACHGEBIETE (Int. Cl. )

C 08 L 63/00

C 08 K

C 09 K

B 41 M

Der vorliegende Recherchenbericht wurde für alle Patentansprüche erstellt.

| Recherchenort | Abschlußdatum der Recherche | Prüfer |
|---|---|---|
| WIEN | 26-03-1987 | KALTENEGGER |